**Europäisches Patentamt**

**European Patent Office**

**Office européen des brevets**

(19)

(11) Publication number: **0 084 549**
**B1**

# (12) EUROPEAN PATENT SPECIFICATION

(45) Date of publication of patent specification: **12.11.86**

(51) Int. Cl.⁴: **B 62 D 53/06**

(21) Application number: **82902360.5**

(22) Date of filing: **02.08.82**

(86) International application number:
**PCT/GB82/00238**

(87) International publication number:
**WO 83/00468 17.02.83 Gazette 83/05**

(54) **FOLDING GOOSENECK TRAILERS.**

(30) Priority: **31.07.81 GB 8123506**

(43) Date of publication of application:
**03.08.83 Bulletin 83/31**

(45) Publication of the grant of the patent:
**12.11.86 Bulletin 86/46**

(84) Designated Contracting States:
**AT BE CH DE FR GB LI LU NL SE**

(56) References cited:
**EP-A-0 010 985**
**EP-A-0 040 542**
**GB-A-1 585 241**
**US-A-2 431 436**
**US-A-3 419 169**
**US-A-3 756 443**
**US-A-4 078 684**
**US-A-4 103 793**
**US-A-4 164 297**

(73) Proprietor: **CRAVEN TASKER LIMITED**
**Staniforth Road**
**Darnall, Sheffield S9 4LL (GB)**

(72) Inventor: **ANDERSON, Geoffrey Brian**
**Filkins Riverview Close Chilbolton**
**Stockbridge Hampshire (GB)**
Inventor: **HARRIS, Bryan Sidney**
**Nutwood School Lane St. Marybourne**
**Andover Hampshire (GB)**

(74) Representative: **Fisher, Bernard et al**
**Raworth, Moss & Cook 36 Sydenham Road**
**Croydon Surrey CR0 2EF (GB)**

EP 0 084 549 B1

Courier Press, Leamington Spa, England.

## Description

This invention relates to trailers having gooseneck connections for attachment to tractor vehicles.

Such gooseneck connections are used for connecting trailers for transporting heavy goods to heavy tractor units. The trailer normally comprises a platform supporting the goods.

There are known trailers having goosenecks which are collapsible so that the neck can form an extension of the trailer platform which can be used as a ramp for loading the trailer. In these folding gooseneck trailers the gooseneck is attached to the platform by two links, forward and rearward, and the rear link is movable to alter the inclination of the neck relative to the platform and to move the neck from its raised position, in which it may be attached to a tractor, to its lowered position in which it is in alignment with the platform to serve as a ramp. Such trailers are described in British Patent 1585241 and European Patent Publication 0010985 (corresponding to the preamble of claim 1).

In these known trailers the rear link is moved by a hydraulic ram which is mounted behind the rear link, generally below the trailer platform, and it is the lower end of the rear link which is moved relative to the platform. This arrangement allows lowering of the front end of the trailer to the ground, with tilting of the gooseneck to allow the tractor to be driven away, but if it is desired to raise the platform while the trailer is attached to the tractor, for example to increase its ground clearance, it is necessary for the gooseneck itself to be tilted.

According to the present invention there is provided a trailer having a gooseneck connection for attachment to a tractor vehicle, the connection comprising a neck having its forward end adapted for attachment to the tractor vehicle and two longitudinally spaced links suspending the forward end of the trailer platform from the rear end of the neck, one of the links comprising a rod and a crank pivoted to each other and the other link being pivoted to the neck and platform, and a ram connected to the platform and to the crank to move the crank such that the inclination of the neck relative to the platform may be varied and the neck may be moved from a position in which it is attachable to the tractor vehicle to a position in which it is alignable with the platform, characterised in that the front link comprises the rod and crank, the lower end of the rod is pivoted to the platform, the crank is pivoted to the neck and the crank is releasably lockable to the neck.

The pivot connecting the rear link to the platform may itself be lockable.

Using this arrangement the neck may be tilted upwardly, to lower the platform to the ground and raise the neck to allow the tractor to be moved, by unlocking the crank from the neck, locking the rear link to the platform and operating the ram to rotate the crank. The neck can be lowered to provide an extension of the platform by operating the ram with the crank locked to the neck and the rear link and platform unlocked. Also with the crank locked and the rear link unlocked, the ram may be operated to raise the platform to increase its clearance while the neck is attached to the tractor. This latter operation can be carried out without altering the inclination of the neck relative to the tractor.

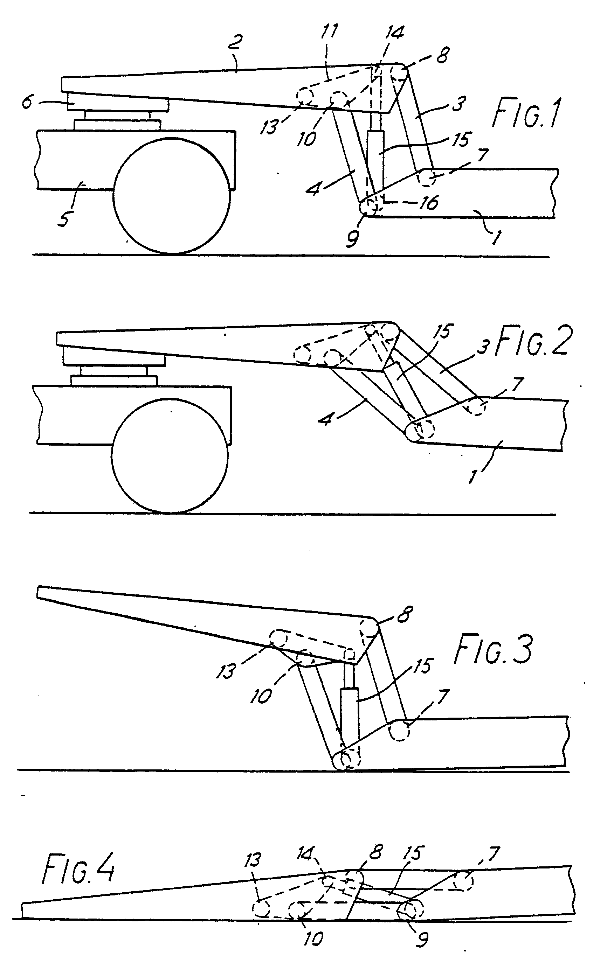

A folding gooseneck unit according to the invention will now be described by way of example with reference to the accompanying drawings, in which Figures 1 to 4 are diagrammatic elevations showing essential parts of a gooseneck unit in different operative positions.

In the drawings there is shown the front 1 of the load-bearing platform of a trailer: the platform is mounted on a chassis provided with road wheels, not shown in the drawings, in conventional manner. The front 1 is connected to the rear of a gooseneck 2 by a rear link 3 and a front link 4. Gooseneck 2 is provided in known manner with a pivot pin for attachment to the rear of a tractor 5 by means of a fifth-wheel coupling 6.

Rear link 3 comprises a rigid rod connected to the platform 1 by pivot 7 and to the gooseneck by pivot 8: front link 4 comprises a rod connected to the platform by pivot 9 and to bell crank 11 by pivot 10. One end of bell crank is connected to the gooseneck by pivot 13 and the other end of the bell crank is connected by pivot 14 to the stem of double-acting hydraulic ram 15 which is connected to the platform by pivot 16. Ram 15 is supplied with operating hydraulic fluid under pressure by conventional means, not shown in the drawings.

Means are provided for locking link 3 to platform 1 (i.e. to prevent relative rotation of link 3 and platform 1 about pivot 7) and for locking bell crank 11 to the gooseneck 2 (i.e. to prevent relative rotation of the gooseneck and bell crank about pivot 13). The locking means may comprise pins which are movable manually or hydraulically to lock and unlock the respective pivots as required.

Figure 1 shows the gooseneck and trailer in the normal running position when the trailer is being towed. In this position pivots 7 and 13 are both locked so that the connection between the gooseneck and the trailer is essentially rigid and the platform and gooseneck are both substantially horizontal. In this position ram 15 is fully extended.

Figure 2 shows the positions of the various components when the gooseneck is still mounted on the tractor but the front of the platform is raised from the position of Figure 1, for example to increase the ground clearance of the platform to negotiate hump-back bridges and the like. Starting from the position of Figure 1, pivot 7 is unlocked to allow rotation of link 3 relative to platform 1 and the stem of ram 15 is retracted under hydraulic pressure. The effect of this retraction is to raise the end of platform 1 with simultaneous rotation of links 3 and 4 to the position shown in Figure 2.

The platform may be lowered again by extending the stem of ram 15 to return the platform to the position of Figure 1, pivot 7 then being locked for normal running.

Figures 3 and 4 show a method of disconnecting the gooseneck from the tractor and lowering the gooseneck to the ground. Starting from the position shown in Figure 1, the bell crank is unlocked to allow rotation about pivot 13 but pivot 7 remains locked. The stem of ram 15 is then retracted to cause rotation of the bell crank about pivot 10 so that pivot 13 is raised and the gooseneck rotates about pivot 8 to a raised position, relative to the platform shown in Figure 3. Before this rotation commences the gooseneck is disconnected from the fifth-wheel of the tractor. The gooseneck remains supported by the tractor and the front end of the platform is lowered to the ground. Further rotation of the gooseneck raises it clear of the tractor which may then be driven away.

After removal of the tractor ram 15 may be extended again until the gooseneck and platform are in the relative positions shown in Figure 1, but with the end of the platform resting on the ground. The bell crank may then be locked to prevent rotation about pivot 13 and the supply of hydraulic pressure to the ram may be discontinued.

In order to allow loading of the platform the gooseneck may be lowered to the position shown in Figure 4. When the platform has been lowered to the ground as described above pivot 7 may be unlocked and the stem of ram 15 fully retracted while the bell crank remains locked to the gooseneck. The effect of this operation is to lower the gooseneck to the position shown in Figure 4, in which its upper surface is substantially parallel with the platform deck. A load for the platform may then be rolled along the gooseneck and on to the deck.

To recouple the trailer to a tractor the above-described sequence of operations may be reversed.

In a preferred arrangement the trailer is provided with two sets of links, one on each side of the trailer. The two sets of links may each have a respective ram connected to the bell cranks of the front links.

The gooseneck may be provided with a folding king pin for attachment to the tractor: the king pin can then be folded when the gooseneck is in the position shown in Figure 4 to avoid damage. Alternatively the means for attaching the gooseneck to a tractor may be mounted on a removable sub-frame.

## Claims

1. A trailer having a gooseneck connection for attachment to a tractor vehicle, the connection comprising a neck (2) having its forward end adapted for attachment to the tractor vehicle and two longitudinally spaced links suspending the forward end of the trailer platform (1) from the rear end of the neck, one of the links comprising a rod (4) and a crank (11) pivoted to each other and the other link (3) being pivoted to the neck and platform, and a ram (15) connected to the platform and to the crank to move the crank such that the inclination of the neck relative to the platform may be varied and the neck may be moved from a position in which it is attachable to the tractor vehicle to a position in which it is alignable with the platform, characterised in that the front link comprises the rod (4) and crank (11), the lower end of the rod (4) is pivoted to the platform (1), the crank (11) is pivoted to the neck (2) and the crank (11) is releasably lockable to the neck (2).

2. A trailer according to claim 1, characterised in that the pivot (7) connecting the rear link (3) to the platform is releasably lockable.

3. A trailer according to claim 1 or 2, characterised in that it is provided with a pair of front links and a pair of rear links, the links of a pair being positioned on respective opposite sides of the trailer.

4. A trailer according to claim 3, characterised in that it has respective hydraulic rams connected between the front end of the platform and the cranks of the front links.

## Patentansprüche

1. Anhänger mit einer Schwanenhalsverbindung zur Anbringung an einem Zugfahrzeug, wobei die Verbindung einen Hals (2), dessen vorderes Ende zur Anbringung an dem Zugfahrzeug ausgebildet ist, sowie zwei in Längsrichtung beabstandete Verbindungen aufweist, die das vordere Ende der Anhängerplattform (1) an dem hinteren Ende des Halses (2) aufhängen, wobei eine der Verbindungen eine Stange (4) und einen Hebel (11) aufweist, die aneinander angelenkt sind, und die andere Verbindung (3) an dem Hals (2) und der Plattform (1) angelenkt ist, sowie ein Stellzylinder (15) mit der Plattform und mit dem Hebel (11) verbunden ist, um den Hebel (11) derart zu bewegen, daß die Neigung des Halses (2) gegenüber der Plattform (1) verändert werden kann und der Hals (2) von einer Position, in der er an dem Zugfahrzeug anbringbar ist, in eine Position bewegt werden kann, in der er in eine gerade Linie mit der Plattform bringbar ist, dadurch gekennzeichnet, daß die vordere Verbindung die Stange (4) und den Hebel (11) enthält, das untere Ende der Stange (4) an der Plattform (1) angelenkt ist, der Hebel (11) an dem Hals (2) angelenkt ist und der Hebel (11) lösbar mit dem Hals (2) verriegelbar ist.

2. Anhänger nach Anspruch 1, dadurch gekennzeichnet, daß der die hintere Verbindung (3) mit der Plattform (1) verbindende Drehzapfen (7) lösbar verriegelbar ist.

3. Anhänger nach Anspruch 1 oder 2, dadurch gekennzeichnet, daß er mit einem Paar von vorderen Verbindungen und einem Paar von hinteren Verbindungen versehen ist, wobei die Verbindungen eines Paares an einander gegenüberliegenden Seiten des Anhängers angeordnet sind.

4. Anhänger nach Anspruch 3, dadurch gekennzeichnet, daß er hydraulische Stellzylinder aufweist, die jeweils zwischen dem vorderen Ende der Plattform und den Hebeln der vorderen Verbindungen eingesetzt sind.

**Revendications**

1. Remorque comportant une liaison à col de cygne pour fixation sur un véhicule tracteur, la liaison comportant un col (2) ayant son extrémité antérieure conçue de manière à pouvoir se fixer véhicule tracteur, et deux bielles longitudinalement espacées et suspendant l'extrémité antérieure de la plateforme de la remorque (1) à partir de l'extrémité postérieure du col, l'une des bielles comprenant une tige (4) et une manivelle (11) pivotant l'une sur l'autre, et l'autre bielle (3) étant montée à pivotement par rapport au col et à la plateforme, et un vérin (15) relié à la plateforme et à la manivelle (11), afin de déplacer cette dernière de manière que l'inclinaison du col par rapport à la plateforme puisse varier, et que le col puisse être déplacé depuis une position dans laquelle il peut être attaché au véhicule tracteur jusqu'à une position dans laquelle il peut être aligné avec la plateforme, caractérisée en ce que la bielle frontale est composée de la tige (4) et de la manivelle (11), l'extrémité inférieure de la tige (4) pivote par rapport à la plateforme (1), la manivelle (11) pivote par rapport au col (22), et la manivelle (11) est verrouillable au col (2) de façon libérable.

2. Remorque selon la revendication 1, caractérisée en ce que le pivot (7), reliant la bielle postérieure (3) à la plateforme, est verrouillable de façon libérable.

3. Remorque selon la revendication 1 ou 2, caractérisée en ce qu'elle comporte une paire de bielles frontales et une paire de bielles postérieures, les bielles d'une paire étant positionnées sur les côtés opposés respectifs de la remorque.

4. Remorque selon la revendication 3, caractérisée en ce qu'elle comporte des vérins hydrauliques respectifs connectés entre l'extrémité frontale de la plateforme et les manivelles des bielles frontales.

FIG.1

FIG.2

FIG.3

FIG.4